# EUROPEAN PATENT SPECIFICATION

(11) **EP 2 663 379 B1**
(45) Date of publication and mention of the grant of the patent: **27.12.2017**
(21) Application number: 11855488.0
(22) Date of filing: 11.01.2011
(51) Int. Cl.: B01D 39/16, B01D 67/00, B01D 29/21, B01D 29/23, B01D 46/52, B01D 29/11

(54) **METHOD FOR MANUFACTURING OF PLEATED FILTERS**
VERFAHREN ZUR HERSTELLUNG EINES GEFALTETEN FILTERS
PROCÉDÉ DE FABRICATION DE FILTRES PLISSÉS

(43) Date of publication of application: 20.11.2013
(73) Proprietor: Amazon Filters Spólka z Ograniczona Odpowiedzialnoscia, 05-077 Warszawa-Wesola (PL)
(72) Inventor: GRADON, Leon, 02-796 Warszawa (PL); BODASINSKI, Jacek, 02-840 Warszawa (PL); RUMINSKI, Witalis, 03-982 Warszawa (PL); KMUK, Pawel, PL-05-091 Zabki (PL); GRADON, Jan, 02-796 Warszawa (PL)
(74) Representative: Balinska, Ewa
(86) International application number: PCT/PL2011/000002
(87) International publication number: WO 2012/096583

(56) References cited:
- EP-A1- 1 240 934
- WO-A1-96/33001
- DE-A1- 10 357 131
- DE-A1- 19 749 598
- DE-A1-102005 036 366
- DE-U1-202004 003 326
- US-A- 3 241 680

## Description

An object of a present invention is a pleated filter and a method for manufacturing of pleated filters with improved efficiency, which pleated filters are used to remove solid particles suspended in liquids or gases.

The increasing requirements relating to filtration efficiency of filters for removing solid particles suspended in liquids or gases leads to searching for new solutions relating to a structure and a form of filters.

The effectiveness of filtering depends on the effectiveness of the process determined by the filtration efficiency, such as the percentage of particles captured by a filter in relation to the whole amount of particles present in a suspended solids are to be filtered, which is usually expressed in % by weight (percentage by weight), a pressure drop across a filter determining energy expenditure required for forcing on a filtered fluid through the filter i.e. by performing mechanical energy balance to the flow, as well as a filter life, that is determined by the time of its use up to a moment of exceeding by the filter requirements determining acceptable filtering efficiency and a filter flow resistance.

A structure of a filter is determined by a construction of a filtering layer. The most commonly used material for the manufacture of high performance filters are non-woven materials. There are two different types of filtration: depth-type filtration and surface-type filtration. In the depth-type filters particles suspended in filtered fluid are retained inside the filters and are settled on fibres forming their structure. In the surface-type filters particles are retained on a surface of a filter material forming a layer so-called filter cake. The growing layer of retained particles causes increase in pressure drop across a filter, and after exceeding its critical value the filter becomes useless. Extending a life-time of a filter is achieved by developing a total area of the filter. This can reduce a thickness of the filter cake because the amount of retained material is distributed over larger area. Moreover, at a given volumetric flow of filtered fluid a linear flow velocity of suspension on the filter is reduced, and thus in accordance with the Darcy's law the flow resistance through the entire filter proportionately decreases.

In order to develop maximally a filtering area on one hand, and to meet requirement to fit the filter material of small volume, on the other hand, makes that in traditional filters a pleated filtering sheet is used, that is arranged in the form of a cylinder and located in the filter housing. Such solutions are known from US patents No. US 4151095, US 4710297, US 5871641, US 6036752 and US 6315130 and from EP 0904819. In addition to these advantages, pleated shaping of filters has also drawbacks. The first disadvantage is the complex fluid flow in the pleats area. Further, a fluid entering into the filter is directed mainly to a corner of each pleat, and particles from a filtered suspension are mainly deposited in this place, whereas the remaining part \ of the filter surface area is not used. Furthermore, due to shear stresses exerted on the surface of a pleat the particles deposited from the filtered medium are moved to a corner of each pleat. The second drawback of pleated arrangement of filtering material is that with increasing flow resistance the whole structure of the pleated material, which is mostly built of thin non-woven layers, is deformed and collapsed.

The solutions are known aimed at preventing the degradation of pleated filters. According to the patent publications WO 01/85301, DE 2715204, WO 01/21279, JP 10112507, DE 102005014360, an improved work and increased efficiency of the filter can be achieved by strengthening the pleated structure through supporting its internal part by the rigid porous core as well as applying a porous foam layer on the outside part of the pleats, i.e. on the outer side of the pleat ridges. In addition, just behind the outer layer of the foam a filter sorption particulate material is provided, which enters between the pleats and stabilizes their position. The disadvantage of these solutions is that the outer depth filtering layer does not change the nature of the flow within the pleat, and additionally serves as a pre-filter (preliminary filter) and causes a stoppage large amounts of dust or other material removed from the slurry. This effect causes a rapid increasing of the pressure in the outer part of the filter and a strong pressure on pleats which results in their compression and collapsing.

In another known solution, to an outer side of the pleat ridges of a pleated filter a covering is applied in the form of a non-woven sleeve, preferably stretched on the outer surface of the pleated filter and immobilized on it by fixing caps provided on both end surfaces, top and bottom, of the filter base. Following a similar approach, WO 96/33001 discloses a fibrous layer which is affixed to the pleats using an adhesive or heat fusion. The method according to the present invention eliminates above named disadvantages of known solutions and consists in that on the outer ridges of pleats made of filtering material a covering in a form of at least one single fibrous layer is applied by employing a melt-blown thermoplastic polymer formation technique, in one embodiment of the invention, a fibrous layer consists of polymer fibres having a chemical affinity for the material from which the pleads of the pleated filter are made.

In the manufacturing method of the pleated filters obtained by pleating the filter material and folding the pleated material into a cylindrical configuration according to present invention, at least one single layer of fibrous covering comprising melt-blown fibres of thermoplastic polymer is applied to the outer ridges of pleats made of filtering material. During application the pleated filter is arranged in parallel to the blowing head which blows the melted polymer forming fibres, wherein the filter performs at the same time rotational movements and reciprocating motion, while a distance of the blowing head from an outer surface of the filter is selected so that fibres at the moment of contacting the pleat ridge still remain in a plastic state.

In further one embodiment, at least one from rotational and/or reciprocating motions of the pleated filter during application of at least one fibrous layer is a non-uniform motion.

According to embodiment of present invention as thermoplastic polymer the polymer having a chemical affinity for the material from which the pleated filter is made can be used, and particularly preferably the same polymer. In another embodiment the polymer showing no chemical affinity for the material from which the pleated filter is made can be used, or showing only a poor affinity.

In an embodiment of present invention, the distance between adjacent fibres in at least one deposited layer of the fibrous covering is greater than 5 fibre diameters and less than 10 fibre diameters.

Furthermore, in an embodiment of the method according to the present invention, the fibre diameter of the fibres used in the fibrous covering layer arranged on the outer side of pleats of the pleated filter is from at least 30 to 80 times smaller than the distance between the ridges of adjacent pleats, and particularly preferably at least 50 times smaller than the distance between ridges of the adjacent pleats.

The method according to the present invention provides creating bindings between adjacent pleats of a filtering material of said pleated filter by means of fibres of the fibrous covering which fibres braiding the pleated filter and said method causes multiple reinforcement of the filter structure against crushing pressure of fluid in comparison with conventional filters having no covering layer developed according to the present invention. Additional beneficial effect of the present invention results from the fact that the fibres of the applied fibrous covering cause disturbance in flow of fluid stream containing particles suspended therein, so that the fluid stream after passing through a layer of fibrous covering is oriented at an angle to the pleated material surface in the filter. As a result, a filtering surface of pleats is used in its entirety during filtering of a purified fluid contrary to the known, typical pleated filters without braiding in the form of inventive fibrous covering, in which know filters collected deposits are retained mainly in corners of filter pleads. This angled orientation of filtered fluid flow according to present invention causes significant extension of the working life of said pleated filter.

The exemplary preferred embodiments of pleated filter as well as a method for its manufacturing according to present invention are shown in the attached drawings, in which individual figures show:

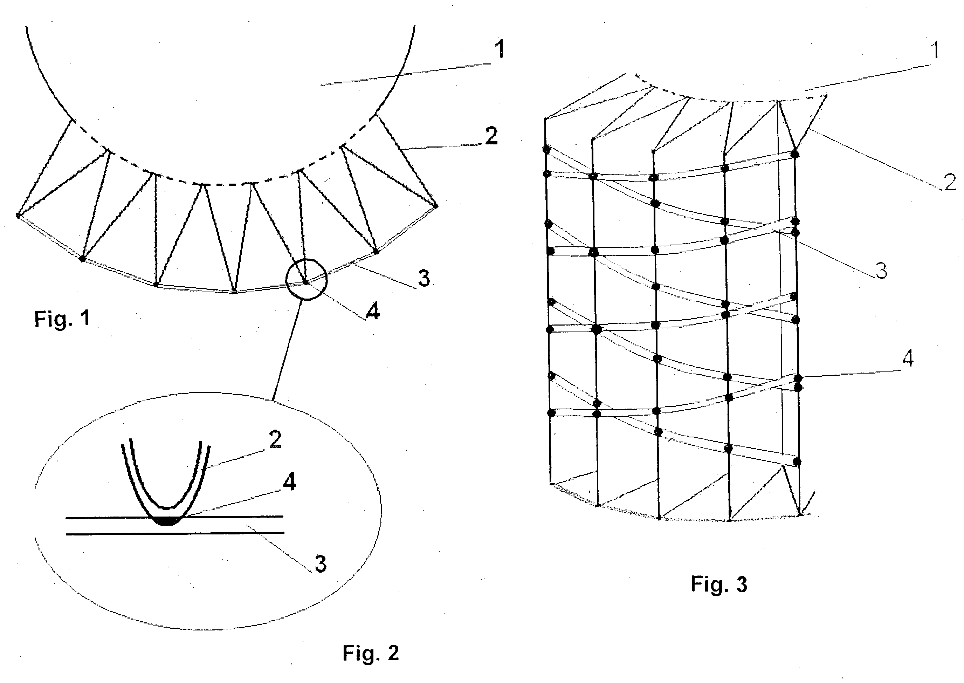

Fig. 1 - a top view of the fragment of the pleated filter according to the first embodiment of the invention;
Fig. 2 - an enlarged view from above of a detail marked in Fig. 1 representing a connection area between pleat ridge of the pleated filter and a single fibre of the layer of fibrous covering in which the bond is visible;
Fig. 3 - a perspective view of a part of a side surface of the pleated filter in the first embodiment of the present invention showing fibres of the layer of fibrous covering;

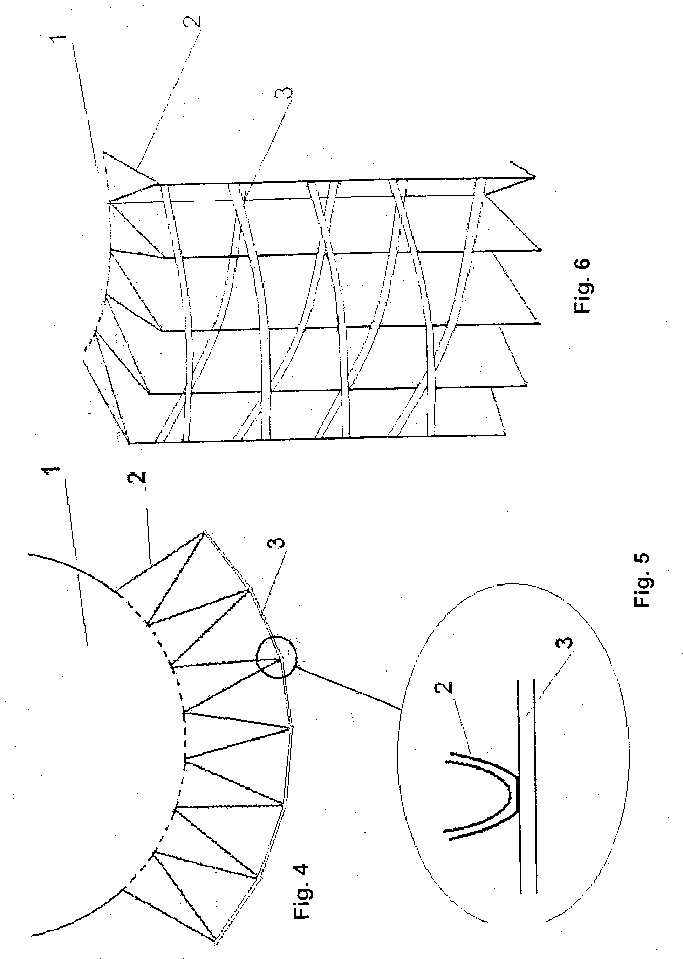

Fig. 4 - a top view of the fragment of the pleated filter in second embodiment of the filter according to present invention;
Fig. 5 - an enlarged view from above of a detail marked in Fig. 4 showing a mechanical connection between a pleat ridge of the pleated filter and a fibre of the fibrous covering;
Fig. 6 - a perspective view of a part of a side surface of the pleated filter in the first embodiment of the present invention showing fibres of the layer of fibrous covering;

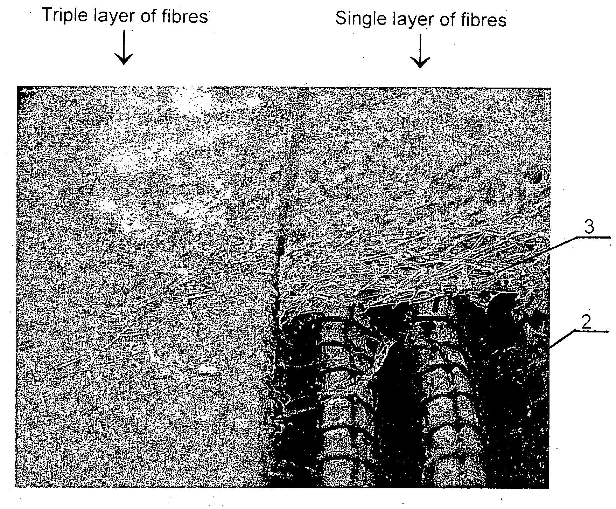

Fig. 7 - a microscopic image of a structure of the layer of fibrous covering according to the first/second embodiment of the present invention.

In the method according to the present invention, a pleated filter 1 is arranged under a blowing head which blows a molten polymer and in parallel to said head, which pleated filter 1 is set into motion, so that it performs simultaneously both a rotational and reciprocating motions. In one embodiment of the method, at least one of both above motions is non-uniform. According to the present invention in the method as pleated filters any known pleated filters of any size can be used and can be made of any fibrous filtering materials, which are used in the art and on which a fibrous covering layer of thermoplastic fibres can be applied, for example such as polymeric filter materials made of polymer fibres, particularly selected from polyamide, polypropylene and/or polyester fibres or their blends. It is also possible to use for the pleated filter filtering materials consisting of mineral fibres, for example such as, glass fibres, basalt fibres or the like, as well as filtering materials consisting of vegetable fibres, for example such as, cellulose, viscose and/or cotton fibres. It is further possible to use in the pleated filter a filtering material made of polycarbonates. In one embodiment of the invention, the rotational motion of the pleated filter 1 during application of fibrous covering can be uniform motion, while simultaneous reciprocating motion can be non-uniform. In another embodiment of the invention, rotational motion of the pleated filter 1 can be a non-uniform motion while simultaneous reciprocating motion may be a uniform motion. It is further possible when said both motions are simultaneously non-uniform or in another embodiment they are simultaneously uniform. During application of the at least one layer of fibrous covering a distance between the blowing head and the pleated filter outer surface is selected so that a fibre 3 coming out from the blowing head at the moment of contact with said outer surface of a ridge of each pleat 2 of the filtering material of the pleated filter 1, still remains in a plastic state. According to embodiments of the present invention, the distance of the pleated filter 1 from the blowing head in the case of applying the polymer fibres consisting of thermoplastic polymers is in the range from 50 mm to 200 mm, preferably, from 60 mm to 100 mm, and most preferably from 70 mm to 80 mm. An arrangement (distribution) of fibres 3 on the pleat ridges depends on the pleated filter 1 movements during said fibres application and it has a systematic, regular character in the case of simultaneously uniform rotational and reciprocating motions of pleated filter 1 or preferably it has a random character due to non-uniform motions of the filter 1, particularly at least one non-uniform motion, i.e. rotation or reciprocating motion. The material of the fibre 3, after coming into contact with a ridge of a pleat 2 of the filter material deeply penetrates into the porous structure of the pleat material at the contact point, and the fibre 3 after its solidification permanently binds with the pleat's ridge.

According to the first embodiment of the invention, as a material of fibres 3 for at least one layer of fibrous covering which is applied on outer surface of the ridges of the pleats 2 of the pleated filter 1 made of a filtering material, such material is used having chemical affinity for the material from which the pleated filter 1 is made. However, it is also possible to use material of fibres 3 exhibiting similar chemical and/or physical properties such as a melting point, and especially materials ensuring good adhesion of the fibres of the applied fibrous covering to the filtering material of the pleat ridges of the pleated filter 1 at the coating temperature. According to such embodiment in the case of polymer fibres the temperature of the polymer leaving the blowing head i.e. at the head exit ranges from 250°C to 300°C and the ambient air temperature is usually from 25°C to 50°C, preferably from 25°C to 35°C.

In a preferred variant the first embodiment of the present invention for the fibrous covering fibres made of the material of the same kind or particularly made of the same material as the material of the pleat ridges of the pleated filter 1 are used. For example, such polymeric materials as selected from polyamide and/or polypropylene and/or polyester or their mixtures can be used as a filtering material of the pleated filter 1, and similar polymeric materials such as polyamide and/or polypropylene and/or polyester and/or their mixtures can also be used for the fibres 3 of at least one layer of fibrous covering. In such embodiment, the polymer fibre 3 which is applied on an outer surface of each pleat ridge in the plastic state penetrates in the contact point area deeply into porous structure of the filtering material of the pleat 2, and after solidification it creates permanent bindings with said pleat ridge and forms contact bridges 4 between the ridges of said pleats 2 and the fibres 3 of the fibrous covering.

According to the second embodiment of the present invention, on an outer surface of said pleat ridges of said pleated filter 1 made of a filtering material that does not contain any thermoplastic polymers, for example, of such filtering material as containing mineral fibres such as glass, vegetable and/or polycarbonate fibres, at least one layer of fibrous covering is applied consisting of fibres 3 made of thermoplastic polymer materials as mentioned above, wherein the material of which fibres 3 does not show chemical affinity for the filtering material of the pleats and does not produce bindings between said ridges of pleats and a fibrous covering layer as applied. In such embodiment, for fibres 3 of a layer of the fibrous covering such a polymer material is used, for example polypropylene material, that after deposition and during solidification of fibres, which were applied in a plastic state, can create mechanical connections between the fibres 3 of the fibrous covering and pleat ridges made of the filtering material (not polymeric), as a result of shrinkage of the deposited polymer fibres 3, particularly polypropylene fibres, during solidification.

According to the present invention, in both of the above-described embodiments at least one layer of the fibrous covering consisting of polymer fibres can be applied, but also several layers of fibres forming fibrous covering can be applied on outer surface of pleats, depending on the type and size of the used pleated filter 1. For example it can be applied from 1 to 5 or up to 10 layers of fibrous covering, and even from 1 to 25 layers. It is assumed that the thickness of a single polymer fibre layer of fibrous covering that can be applied may amount to about 200 microns. Total thickness of the applied layer of fibrous covering may be in the range from 200 microns up to 8 mm, depending on the number of deposited layers, as well as on the covering material as used and the type and size of the pleated filter 1 as used. Anyway the said thickness should be small enough to avoid a depth-type filtration through this layer of fibrous covering. The fibres through which the pleat ridges are braided permanently stiffen the structure of the pleated material and the pleated filter 1 as a whole. The stiffening force depends on the number of bridges formed on the contact points between the pleat ridges and the deposited fibres 3. Free spaces formed between the deposited fibres of the fibrous covering cause disturbance in the flow of the filtered medium downstream of a layer of fibrous covering, so that the filtered medium flow is directed at an angle to the surface of each pleat. In preferred embodiments, the angles under which filtered medium flow, preferably fluid flow, is directed with regards to pleat surface after passing through the layer of fibrous covering are in the range from 15° to 90°, preferably from 60° to 90°, whereas the most preferred angle of the filtered medium flow inclination is approximately 90° or as close as possible to that 90° inclination. The distance between adjacent fibres 3 in the applied layer of fibrous covering is preferably more than 5 times longer as the diameter of the fibres as applied, and preferably shorter than 10 times of the fibre diameter i.e. the distance is greater than 5 fibre diameters and smaller that 10 fibre diameters (ranges from about 5 to about 10 diameters of the fibres) in fibrous covering. The fibre diameter of the fibres used for the fibrous covering layer of the pleated filter 1 is at least from 30 to at least 80 times smaller than the distance between the ridges of the adjacent pleats 2 of the filter material in the pleated filter 1, and preferably the diameter is at least 50 times smaller than the distance between adjacent ridges of the pleats 2. The diameter of the fibres 3 in the fibrous covering is selected depending on the distance between ridges of the adjacent pleats 2 of the filter material of the initial pleated filter 1 used, as well as taking into account an intended use of the resulting final filter.

Example. In the exemplary, illustrative embodiment of the method according to the invention there has been used a pleated filter 1 made of pleated polyester material usually applied for purification of an oil, which filter having a length of each pleat of 15 mm, the distance between the ridges of the adjacent pleats of 2 mm. The pleated filter 1 has been placed under the extruder head at a distance of 80 mm from it, but it could be placed at a distance ranging from 50-200 mm, away from the head, parallel to the head slot. The filter positioned in the holder has performed non-uniform rotational motion (revolutions) and uniform reciprocating motion with respect to the head. Polyester has been used as a thermoplastic polymer for manufacturing melt-blown polymer fibres for a fibrous covering layer. The molten polymer leaving the head has a temperature of 270°C, but its temperature can range from 250°C to 300°C, whereas the temperature of ambient air has been about 35°C, but this temperature can range from 25°C to 50°C. The linear velocity of the polymer at the exit of the blowing head has been of 0.4 m/s, and the linear velocity of the defibering air having temperature 360°C has been 30 m/s. The average value of diameter of produced fibres has been about 20µm, and the distance between the deposited fibres in the fibrous covering has been on the average 150 µm. After applying double covering, i.e. two layers of fibres of the fibrous covering on the pleated filter 1, on the obtained filter according to the invention provided with the fibrous covering some tests have been performed. For comparative purposes corresponding output pleated filter without any layer of fibrous covering as a comparative filter has been examined. It was determined during the tests that the filter made according to the present invention collapsed at an overpressure which has been twice higher than the nominal overpressure i.e. overpressure of pleated filter lacking from fibrous covering. The pleated filter obtained according to the invention showed a four times higher strength. At the same time it has been noted from 60 to 90%, preferably about 80%, increase in the amount of dust particles caught and retained on the inventive filter surface, in comparison with the comparative filter without any fibrous covering under identical filtration conditions. The silica slurry containing particles with a diameter of 10um suspended in oil was subjected to filtration testing during carry out the above-described comparative filtration effectiveness tests.

## Claims

1. A method for manufacturing a pleated filter (1) obtained by
pleating a filtering material and folding the pleated filtering material to form a cylindrical configuration, **characterized in that**, the method comprises applying at least one layer of fibrous covering on the outer surface of ridges of the pleats of pleated filter (1) and creating bindings between the adjacent pleats (2) of said pleated filter (1) by means of fibres (3) of a fibrous covering which fibres (3) braiding the pleated filter (1), and which fibrous covering comprises melt-blown fibres (3) of thermoplastic polymer, wherein the pleated filter (1) is arranged under the blowing head, parallel to the head slot, which blows the molten polymer forming fibres (3), whereas at the same time the filter (1) performs simultaneously both a rotational movement and reciprocating motions, while the distance of the blowing head from the said outer surface of the filter (1) is selected so that the fibres blown from the blowing head at the time of contacting the pleat ridges are still in a plastic state.

2. The method according to claim 1, **characterized in that**, at least one from said rotational and reciprocating motions of said pleated filter (1) during application of the fibrous covering is a uniform motion.

3. The method according to any one of claims 1-2, **characterized in that** said thermoplastic polymer is the polymer having chemical affinity for the filtering material from which said pleated filter (1) is made, preferably the same polymer material.

4. The method according to any one of preceding claims 1-2, **characterized in that**, said pleated filter (1) is made of a filtering material that does not contain any thermoplastic polymer and said fibrous covering is applied consisting of fibres (3) made of thermoplastic polymer material that does not show chemical affinity for the filtering material from which said pleated filter (1) is made.

5. The method according to any one of preceding claims 1 to 4, **characterized in that**, a distance between adjacent fibres (3) in said at least one layer of fibrous covering is greater than 5 fibre diameters and shorter than 10 fibre diameters.

6. The method according to any one of preceding claims 1 to 5, **characterized in that**, said fibre diameter of the said fibres (3) contained in said layer of fibrous covering is at least from 30 to 80 times smaller than a distance between said ridges of the adjacent pleats (2), and preferably the diameter is at least 50 times smaller than the said distance between said ridges of said adjacent pleats.

7. The method according to any one of claims 1-3 and 5-6, **characterized in that**, said thermoplastic polymer of fibres (3) for said fibrous covering layer to be applied is selected in such a way that said fibres (3) in a plastic state can penetrate in the area of contact point into the depth of porous structure of said filtering material of said pleats (2).

8. The method according to any one of the claims 1-7, **characterized in that**, said fibres (3) of at least one layer of said fibrous covering are polymer fibres, preferably selected from polyester, polypropylene and/or polyamide.

9. The method according to any one of claims 1-7, **characterized in that**, a thickness of the layer of said fibrous covering is in the range from about 200 micrometers to about 8 mm, wherein at least one single layer of fibrous covering or two or more fibre layers are applied.

## Patentansprüche

1. Verfahren zur Herstellung eines gefalteten Filters (1), erhalten durch Falten und Wickeln eines Filtermaterials in eine zylindrische Form, **dadurch gekennzeichnet, dass** das Verfahren Aufbringen von mindestens einer einzigen Vliesummantelungsschicht auf die Aussenseite der Faltenrücken des gefaltenen Filters (1) und Herstellen von Bindungen zwischen den benachbarten Falten (2) des gefaltenen Filters (1) mittels Vliesummantelungsfasern (3) umfasst, welche Fasern (3) das gefaltene Filter (1) umflechten und welche Vliesummantelung die mit dem Blasverfahren aus einem geschmolzenen thermoplastischen Polymer hergestellten Fasern (3) umfasst, wobei das gefaltene Filter (1) unterhalb einem Blaskopf parallel zu dem Blaskopfschlitz angeordnet wird, durch den das die Fasern (3) ausbildende geschmolzene Polymer geblasen wird, und zur selben Zeit eine Drehbewegung und gleichzeitig eine hin- und hergehende Bewegung ausführt, während der Abstand des Blaskopfs zur genannten Aussenseite des gefaltenen Filters (1) derart gewählt wird, dass die aus dem Blaskopf auszublasenden Fasern beim Erreichen der Faltenrücken noch in einem thermoplastischen Zustand vorliegen.

2. Verfahren nach Anspruch 1, **dadurch gekennzeichnet, dass** mindestens eine der genannten Drehbewegung und hin- und hergehenden Bewegung des gefaltenen Filters (1) bei dem Aufbringen der Vliesummantelung eine gleichförmige Bewegung ist.

3. Verfahren nach einem der Ansprüche 1-2, **dadurch gekennzeichnet, dass** das thermoplastische Polymer ein Polymer ist, das eine chemische Affinität gegenüber dem Filtermaterial aufweist, aus dem das gefaltene Filter (1) hergestellt wird, vorzugsweise dasselbe Polymermaterial ist.

4. Verfahren nach einem der Ansprüche 1-2, **dadurch gekennzeichnet, dass** das gefaltene Filter (1) aus dem Filtermaterial hergestellt wird, das kein thermoplastisches Polymer umfasst, und die Fasern (3) der aufzubringenden Vliesummantelung aus einem thermoplastischen Polymer hergestellt sind, das keine chemische Affinität gegenüber dem Filtermaterial aufweist, aus dem das gefaltene Filter (1) hergestellt wird.

5. Verfahren nach einem der Ansprüche 1 bis 4, **dadurch gekennzeichnet, dass** der Abstand zwischen benachbarten Fasern (3) der mindestens einer Vliesummantelungsschicht grösser als der 5-fache Faserdurchmesser und kleiner als der 10-fache Faserdurchmesser ist.

6. Verfahren nach einem der Ansprüche 1 bis 5, **dadurch gekennzeichnet, dass** der Faserdurchmesser der in der Vliesummantelungsschicht verwendeten Fasern (3) mindestens von 30- bis 80-fach kleiner als der Abstand zwischen den Faltenrücken der benachbarten Falten (2), vorzugsweise mindestens 50-fach kleiner, als der Abstand zwischen diesen Faltenrücken ist.

7. Verfahren nach einem der Ansprüche 1-3 und 5-6, **dadurch gekennzeichnet, dass** das thermoplastische Polymer der für die aufzubringende Vliesummantelungsschicht vorgesehenen Fasern (3) derart gewählt wird, dass die in dem plastischen Zustand aufzubringenden Fasern (3) in einem punktförmigen Berührungsbereich ins Innere der porösen Struktur des Filtermaterials der Falte (2) eindringen.

8. Verfahren nach einem der Ansprüche 1-7, **dadurch gekennzeichnet, dass** die Fasern (3) der mindestens einer Vliesummantelungsschicht Polymerfaser, vorzugsweise aus thermoplastischen Polymeren, wie Polyester, Polypropylen und/oder Polyamid bestehende Polymerfaser sind.

9. Verfahren nach einem der Ansprüche 1-7, **dadurch gekennzeichnet, dass** die Dicke der aufzubringenden Vliesummantelungsschicht im Bereich von etwa 200 Mikrometer bis etwa 8 mm liegt, wobei mindestens eine einzige Schicht oder zwei oder mehr Schichte der Fasern aufgebracht werden.

## Revendications

1. Procédé de fabrication d'un filtre plissé (1) obtenu
par plissage d'un matériau de filtration et par enroulement du matériau plissé de filtration en une forme cylindrique, **caractérisé en ce que** le procédé comporte l'application sur la surface extérieure des arêtes des plis du filtre plissé (1) d'au moins une couche d'enrobage fibreux et la réalisation des liaisons entre les plis adjacents (2) dudit filtre plissé (1) au moyen des fibres (3) de l'enrobage fibreux, lesquelles fibres clayonnent le filtre plissé (1), et lequel enrobage fibreux comporte des fibres (3) produites par une technique de soufflage d'un polymère thermoplastique en fusion, le filtre plissé (1) étant positionné en dessous de la tête de soufflage parallèlement à la fente de la tête qui souffle le polymère en fusion formant les fibres (3) et en même temps le filtre (1) effectue un mouvement de rotation et simultanément un mouvement alternatif, alors que la distance de la tête de soufflage de ladite surface extérieure du filtre (1) est choisie de façon à ce que les fibres soufflées de la tête de soufflage au moment de contact avec les arêtes des plis soient encore en état plastique.

2. Procédé selon la revendication 1, **caractérisé en ce que** au moins
un des dits mouvements de rotation et alternatif dudit filtre plissé (1) pendant le dépôt de l'enrobage fibreux est un mouvement uniforme.

3. Procédé selon l'une quelconque des revendications 1-2, **caractérisé en ce que** ledit polymère thermoplastique est un polymère ayant une affinité chimique envers le matériau de filtration à partir duquel est réalisé le filtre plissé (1), de préférence le même matériau polymère.

4. Procédé selon l'une quelconque des revendications précédentes 1-2, **caractérisé en ce que** ledit filtre plissé (1) est réalisé en matériau de filtration qui ne contient pas du polymère thermoplastique ainsi que ledit enrobage fibreux qui est appliqué comporte des fibres (3) réalisées en matériau polymère thermoplastique n'ayant pas d'affinité chimique envers le matériau de filtration à partir duquel est réalisé ledit filtre plissé (1).

5. Procédé selon l'une quelconque des revendications précédentes 1 à 4, **caractérisé en ce que** la distance entre les fibres adjacentes (3) dans ladite au moins une couche d'enrobage fibreux est supérieure à 5 diamètres du fibre et inférieure à 10 diamètres du fibre.

6. Procédé selon l'une quelconque des revendications précédentes 1 à 5, **caractérisé en ce que** ledit diamètre desdites fibres (3) contenues dans ladite couche d'enrobage est au moins 30 à 80 fois moindre que la distance entre lesdites arêtes des plis (2) adjacents, et de préférence ce diamètre est au moins 50 fois moindre que ladite distance entre lesdites arêtes des plis adjacents.

7. Procédé selon l'une quelconque des revendications 1-3 et 5-6, **caractérisé en ce que** ledit polymère thermoplastique des fibres (3) pour la couche d'enrobage fibreux à appliquer est choisi afin que lesdites fibres (3) en état plastique puissent pénétrer dans la région de point de contact en profondeur la structure poreuse dudit matériau de filtration desdit plis (2).

8. Procédé selon l'une quelconque des revendications 1-7, **caractérisé en ce que** ledites fibres (3) d'au moins une couche dudit enrobage fibreux sont des fibres en polymère, de préférence choisies du polyester, du polypropylène, et/ou du polyamide.

9. Procédé selon l'une quelconque des revendications 1-7, **caractérisé en ce que** l'épaisseur de la couche dudit enrobage fibreux est comprise entre environ 200 micromètres et environ 8 mm, au moins une couche unique du enrobage fibreux ou deux ou davantage couches de fibres étant appliquées.
